# EUROPÄISCHE PATENTSCHRIFT

(11) **EP 2 509 839 B1**
(45) Veröffentlichungstag und Bekanntmachung des Hinweises auf die Patenterteilung: **03.04.2019**
(21) Anmeldenummer: 10779475.2
(22) Anmeldetag: 11.11.2010
(51) Int. Cl.: B60W 30/06, B60W 10/06, B60W 10/08, B60W 10/10, B60W 10/18

(54) **VERFAHREN UND VORRICHTUNG ZUR STEUERUNG EINES FAHRZEUGS AN EIN OBJEKT WÄHREND EINES EINPARKVORGANGS**
METHOD AND DEVICE FOR STEERING A VEHICLE TOWARD AN OBJECT DURING A PARKING OPERATION
PROCÉDÉ ET DISPOSITIF POUR COMMANDER UN VÉHICULE À L'APPROCHE D'UN OBJET PENDANT UN PROCESSUS DE STATIONNEMENT

(30) Priorität: 12.12.2009 DE 102009058139
(43) Veröffentlichungstag der Anmeldung: 17.10.2012
(73) Patentinhaber: Volkswagen Aktiengesellschaft, 38440 Wolfsburg (DE)
(72) Erfinder: SCHWITTERS, Frank, 38154 Königslutter (DE); HÜGER, Philipp, 38448 Wolfsburg (DE)
(86) Internationale Anmeldenummer: PCT/EP2010/006873
(87) Internationale Veröffentlichungsnummer: WO 2011/069589

(56) Entgegenhaltungen:
- EP-A2- 1 327 553
- DE-A1- 10 105 749
- DE-A1- 19 607 788
- DE-A1-102004 059 131
- DE-A1-102006 045 418
- Bosch: "Kraftfahrtechnisches Handbuch", 1. Januar 2000 (2000-01-01), Vieweg, Braunschweig, XP002614611, ISBN: 3-528-03876-4 Bd. 23, Seiten 504-505,

## Beschreibung

Die Erfindung betrifft ein Verfahren zur Steuerung der Annäherung eines Fahrzeuges an ein Objekt gemäß dem Oberbegriff des Anspruchs 1. Die Erfindung betrifft eine Vorrichtung zur Steuerung der Annäherung eines Fahrzeuges an ein Objekt gemäß dem Oberbegriff des Anspruchs 7.

Bei einem Einparkvorgang eines Fahrzeuges, insbesondere eines automatischen Einparkvorganges bei dem der Fahrer den Einparkvorgang bestimmt und das Fahrzeug die Längs- und Querregelung in die Parklücke übernimmt, ist es wünschenswert, dass besonders Parklücken verwendet werden können, deren Länge für einen Einparkvorgang vom Fahrzeugführer schwer abgeschätzt werden kann. Die Länge der Parklücke wird jedoch auch von dem System des Fahrzeugs zum Einparken bestimmt. Aus diesem Grund wird beim Vermessen und anschließendem Einparken ein relativ großer Abstand an mindestens ein Hindernis gewählt, womit das Einparken in enge Parklücken, bzw. bis kurz vor ein Objekt für die aktuellen Systeme schwer bis gar nicht realisierbar ist.

Aus dem Stand der Technik ist eine Steuerung der Annäherung an ein Hindernis bei Rückwärtsfahrt bekannt (DE 196 07 788 B4), bei der in einem ersten Abstandsbereich zu einem Hindernis durch Beeinflussung der Motorleistung des Fahrzeugs die Geschwindigkeit des Fahrzeugs unter einen vorgegebenen Grenzwert gehalten wird und in einem zweiten Abstandsbereich die Fahrgeschwindigkeit auf einen zweiten Grenzwert begrenzt wird durch Aufbau von Bremskraft in den Radbremsen. Des Weiteren ist aus der DE 10 2004 059 131 A1 eine Fahrzeugsteuervorrichtung für das Bewegen eines Fahrzeugs um eine kleine Strecke bekannt, die eine Steuereinheit aufweist, die auf Grundlage einer berechneten Antriebskraft eine Antriebsvorrichtung und eine Bremsvorrichtung steuert. Ebenfalls bekannt ist aus der EP 1 327 553 A2 ein Steuerungssystem einer Einparkhilfe, die ein Modul zur Fahrgeschwindigkeitskontrolle basierend auf der Steuerung der Bremskraft aufweist.

Die Aufgabe der Erfindung besteht darin, den vorbekannten Stand der Technik zu optimieren um ein Fahrzeug noch exakter an ein Objekt heranzuführen.

Die Lösung der Aufgabe wird durch die unabhängigen Patentansprüche 1 und 7 erreicht. Weitere vorteilhafte Ausführungen der Erfindung finden sich in den Unteransprüchen.

Erfindungsgemäß wird bei einer Annäherung eines Fahrzeugs an ein Objekt das Fahrzeug mit der Leerlaufdrehzahl der Antriebseinrichtung, beispielsweise einem Verbrennungsmotor, betrieben. Objekte können Fahrzeuge oder aber auch andere Hindernisse, wie Pfeiler, Bordsteine, Bäume, usw. sein. Die Verwendung der Leerlaufdrehzahl ist besonders vorteilhaft, da nicht in die Motorsteuerung eingegriffen wird, um das Fahrzeug zu bewegen. Insbesondere für ein Fahrzeug mit Automatikgetriebe ist diese Erfindung besonders vorteilhaft, da bei eingelegtem Gang die Leerlaufdrehzahl das Fahrzeug mit niedriger Geschwindigkeit, ohne weitere Beeinflussung durch den Fahrer, bewegt. Dies erfinderische Annäherung an ein Objekt erfolgt in einem ersten Abstandsbereich zum Objekt, z.B. bei Rückwärtsfahrt an das Objekt. Erfindungsgemäß detektiert ein Sensor, wie z.B. ein Ultraschallsensor am Heckbereich eines Fahrzeugs, den Abstand zum Objekt.

Die Leerlaufdrehzahl ist für den Fachmann bekannt (s. Kraftfahr Technisches Taschenbuch, Bosch, 22. Auflage) und wird dadurch bestimmt, dass Sensoren die Motordrehzahl, Motortemperatur und Drosselklappenstellung ermitteln. Weiterhin lassen sich auch Belastungszustände von beispielsweise einem Automatikgetriebe, einer Klimaanlage, einer Servolenkung und auch anderen Störgrößen erfassen. Mit diesen Faktoren wird die Leerlaufdrehzahl geregelt. Befindet sich ein Fahrzeug im Leerlaufdrehzahlbetrieb und ein Verbraucher wird hinzugeschaltet, hat dies nahezu keinen Drehzahleinbruch zur Folge und kann mit der Leerlaufdrehzahl abgefangen werden.

Erfindungsgemäß wird bis zum Erreichen eines ersten Abstandes, der geringer als der zweite Abstand zum Objekt ist und dessen Ende von mindestens einem Sensor und mindestens einer Steuereinrichtung ermittelt wurde, die Übertragung der Motorleistung an die Räder unterbrochen. Dieses Erreichen des ersten Abstandes ab dem die Unterbrechung der Kraftübertragung erfolgt, ist erfindungsgemäß ebenfalls von dem Neigungswinkel des Fahrzeugs und der Bewegungsrichtung des Fahrzeugs zur oder entgegen einer Neigung abhängig. Diese Parameter werden durch bekannte Sensoren, wie z.B. Raddrehzahlsensoren und/ oder Gangposition und/oder Neigungssensoren etc. die dem Fachmann bekannt sind, an die Steuereinrichtung übermittelt. Die Steuereinrichtung ermittelt anhand der Geschwindigkeit des Fahrzeugs im Leerlauf und der genannten Umfeld- sowie Sensorinformationen den Abstand zum Hindernis bei Annäherung, ab dem ein Bremsvorgang eingeleitet und die Kraftübertragung des Motors auf die Räder unterbrochen wird.

Es ist besonders erfinderisch, dass nach Erreichen des Abstandes bis zu einem zweiten Abstand, der dem Halteabstand entspricht, mit der Bremseinrichtung bis zum Stillstand abgebremst wird. Es ist weiterhin sehr vorteilhaft, dass bei Betätigung der Bremseinrichtung ein Steuersignal erzeugt wird, um mindestens eine Kupplung zur Kraftübertragung der Antriebseinrichtung an mindestens ein Rad mittels eines Aktuators zu öffnen.

Es ist besonders erfinderisch, dass während des Leerlaufbetriebes des Fahrzeugs die Kupplung, z.B. die Getriebekupplung für den ersten Gang oder die niedrigste Übersetzung, z.B. für den Rückwärtsgang, nicht ganz geschlossen ist. Durch dieses Schleifen der Kupplung wird die Geschwindigkeit des Fahrzeugs zur Annäherung an das Objekt weiter verringert auf ca. 1 km/h bis 5 km/h, vorzugsweise 3 km/h, was für die genaue Annäherung an ein Objekt sehr vorteilhaft ist.

Es ist im Sinne der Erfindung, dass die Steuereinrichtung mindestens einen Bremsaktuator steuert, um ein aktives Bremsen bis zum Stillstand vor einem Hindernis zu erreichen. Dies hat zum einen den Vorteil, dass der Stillstand an ein Hindernis exakt gesteuert wird, und zum anderen, dass das Fahrzeug bei Stillstand in dieser Position gehalten wird, insbesondere, indem die Funktion der elektrischen Parkbremse bei Erreichen des Stillstandes automatisch aktiviert ist, bzw. wird.

Es ist vorteilhaft, dass beim Eintreten eines weiteren Objektes, wie z.B. einem Ball in die Annäherungstrajektorie zwischen dem einparkenden Fahrzeug und dem eigentlichen Objekt, ein aktives Bremsen sofort möglich ist, um bereits vor diesem weiteren Objekt zum Stehen zu kommen. Das weitere Objekt wird durch mindestens einen Sensor, wie beispielsweise dem Ultraschallsensor sofort erkannt und an die Recheneinrichtung übermittelt, die unmittelbar den Bremsvorgang aktiviert.

Der Halteabstand zum Objekt bis zu dem eingeparkt werden soll, ist z.B. abhängig von einer vorher durch das Fahrzeug beim Vorbeifahren vermessenen Parklücke, wenn es sich um eine Längs- oder Querparklücke handelt. Nach der vorbeifahrt bekommt der Fahrzeugführer das Signal, dass ein Einparkvorgang möglich ist. Durch Betätigung eines Bedienelementes wird der Einparkvorgang in die Parklücke gestartet.

Durch die Bewegung des Fahrzeugs an das Objekt mit Leerlaufdrehzahl bis zu einem ersten Abstand wird eine niedrige Geschwindigkeit erreicht, die für das genaue Heranfahren an das Objekt sehr vorteilhaft ist. Durch die Abkopplung der Antriebseinrichtung und dem beginn des Bremsvorganges wird die Geschwindigkeit bis zum Stillstand weiter reduziert, um einen exakten Halteabstand zum Hindernis zu erreichen. Bei niedriger Geschwindigkeit ist eine exaktere Auswertung der Sensorsignale möglich und ein genaues Bremsen bis zum Stillstand. Die Ansteuerung mindestens einer Bremse des Fahrzeugs, kann beispielsweise über eine elektronische Bremsensteuerung geschehen, wie z.B. dem bekannten ESP-System (Elektronisches Stabilitäts-Programm).

Der Leerlaufbetrieb bedeutet beispielsweise für ein Fahrzeug mit Automatikgetriebe, dass das Fahrzeug mit einer eingelegten Gangwahlstufe, z.B. "R" für "Rückwärtsfahrt" oder "D" für "Fahren" sich bewegt, ohne dass der Fahrzeugführer die Bremse und/ oder das Gaspedal aktiviert, d.h. keinen Einfluss auf die Längsführung des Fahrzeugs nimmt. Ein Eingriff in die Motorsteuerung ist erfinderisch für den Leerlaufbetrieb nicht notwendig. Der Leerlaufbetrieb wir mit Leerlaufdrehzahl des Motors betrieben, die so gewählt ist, dass der Motor nicht aus geht und das Fahrzeug nach wie vor bewegt wird. Die Leerlaufdrehzahl liegt im Bereich von ca. 800 U/min bis ca. 1500 U/min. Wird das Fahrzeug mit einem Elektromotor für die Annäherung an ein Hindernis betrieben, ist mit Leerlaufdrehzahl der Bereich gemeint bei dem das Fahrzeug mit Automatikgetriebe sich im Geschwindigkeitsbereich von ca. 1km/h bis 10 km/h bewegt, ohne dass der Fahrzeugführer aktiv in die Längsführung eingreift.

Es ist besonders vorteilhaft, dass bei einem Fahrzeug mit Automatikgetriebe bei erfindungsgemäßer Annäherung an ein Objekt, z.B. in eine Parklücke, die Gangwahl für den Richtungswechsel bei mehrzügigem Einparken über mindestens eine Steuereinrichtung und mindestens einem Aktuator veranlasst wird, so dass ein automatisches Einparken ohne Eingriff des Fahrers möglich ist. Mit anderen Worten erfolgt der Gangwechsel von alleine.

Bei einem Fahrzeug mit Handschaltgetriebe wird das Fahrzeug bei Leerlaufdrehzahl im ersten Gang vorwärts, bzw. bei Rückwärtsfahrt im Rückwärtsgang bewegt, ohne dass der Fahrzeugführer das Bremspedal und/oder Gaspedal aktiv betätigt. Durch einen Aktuator, der erfinderisch gesteuert wird, wird die Kupplung zur Kraftübertragung bei Erreichen eines zweiten Abstandes zum Hindernis geöffnet. Es ist ebenfalls im Sinne der Erfindung, dass anstelle der Steuerung des Aktuators der Fahrzeugführer eine Information erhält, die optisch und/oder akustisch ist, und ihm signalisiert die Kupplung zu betätigen. Auch hier ermöglicht die Erfindung durch Ausnutzung der Leerlaufdrehzahl einen besonders energiesparenden Einsatz des Fahrzeugs und durch niedrige Geschwindigkeit ein exaktes Heranfahren an das Hindernis bis zum Stillstand. Alternativ kann der Aktuator so ausgestaltet sein, dass ein Schleifen der Kupplung auch hier ermöglicht wird.

Es ist im Sinne der Erfindung, dass bei Annäherung an ein Objekt an einer Neigung, z.B. auf einer Bergstraße, wenn sich das Fahrzeug also zum Objekt gegen die Neigung bewegen muss, lediglich bei der Anfahrt aus dem Stillstand in die Motorsteuerung eingegriffen wird, um das Fahrzeug kurzzeitig vor dem erfinderischen Leerlaufbetrieb zu beschleunigen.

Erfinderisch wird das heranfahren an ein Objekt durch Betätigen eines Bedienelementes und/oder einer Sprachbedienung eingeleitet.

Besonders erfinderisch ist die Vorrichtung zur Steuerung eines Fahrzeugs bis an ein Objekt, wobei eine Antriebseinrichtung das Fahrzeug bewegt, eine Bremseinrichtung das Fahrzeug abbremst, mindestens ein Sensor den Abstand zum Objekt detektiert und mindestens eine Steuereinrichtung die Daten aufnimmt, auswertet und entsprechende Steuersignale ausgibt. Die erfinderische Vorrichtung bringt das Fahrzeug mittels der Antriebseinrichtung auf eine Geschwindigkeit, die maximal der Antriebsgeschwindigkeit mit Leerlaufdrehzahl entspricht. Die Antriebseinrichtung hält die Geschwindigkeit bis zu einem ersten Abstand und die Bremseinrichtung bremst das Fahrzeug bis zu einem zweiten Abstand, der dem Halteabstand entspricht, bis zum Stillstand.

Es ist weiterhin sehr vorteilhaft, die Erfindung für Hybrid- und / oder Elektrofahrzeuge zu verwenden. Bei Betrieb mit Elektroantrieb ist es vorteilhaft, dass mit dem Elektromotor generatorisch gebremst und die gewonnene Energie rekuperiert, d.h. der Batterie zurückgeführt wird. In dieser vorteilhaften Ausgestaltung der Erfindung würde keine Öffnung der Kupplung erfolgen.

Bevorzugte Ausführungsformen der Erfindung werden nachfolgend anhand der Zeichnungen erläutert.
- Figur 1 bis 3:: Beispielhafter Einparkvorgang
- Figur 4:: Schematischer Aufbau der erfindungsgemäßen Vorrichtung

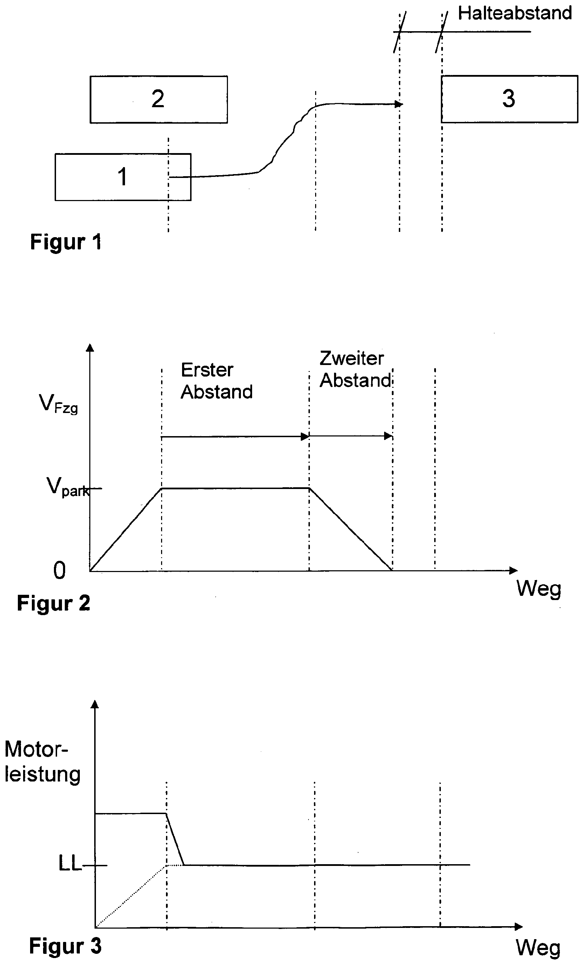

Figur 1 zeigt einen beispielhaften Einparkvorgang gemäß der Erfindung. Beim Vorbeifahren an den Objekten 2 und 3 nimmt das Fahrzeug 1 mittels seitlich gerichteten Ultraschallsensoren die Parklücke zwischen diesen beiden Objekten 2 und 3 auf und signalisiert dem Fahrzeugführer des Fahrzeuges 1, dass ein Einparkvorgang möglich ist. In einer Steuereinrichtung wurde anhand der ermittelten Daten eine Einparktrajektorie berechnet. Nachdem das Fahrzeug 1 steht, betätigt der Fahrzeugführer die Einleitung des Einparkvorganges mit einem Bedienelement. Er wird dann z.B. über eine Anzeigeeinrichtung aufgefordert, den Rückwärtsgang, in diesem Beispielfall die Parkhebelposition "R" für Rückwärtsfahrt mit Automatikgetriebe, einzulegen und die Bremse zu lösen. Mit der Leerlaufdrehzahl des Motors bewegt sich das Fahrzeug bis zu einem ersten Abstand zum Objekt 3 entlang der berechneten Trajektorie. Die Querführung erfolgt automatisch über eine Steuerung der elektromechanischen Lenkung des Fahrzeugs 1. Die hinteren Sensoren die hier ebenfalls nicht dargestellt sind und auch Ultraschallsensoren sein können, des Fahrzeugs 1 ermitteln den Abstand zum Objekt 3. Ab einem im Steuergerät berechneten Abstand zum Hindernis (Erreichen des ersten Abstandes), wird erfinderisch ein Signal an den Aktuator im Automatikgetriebe übermittelt, der daraufhin die Kupplung öffnet und die Momentenübertragung des Motors an die Räder unterbricht. Das Steuergerät sendet mindestens ein Signal an den Bremsaktuator, z.B. der ESP-Bremse mindestens eines Rades und leitet den Bremsvorgang ein. Durch die Informationen der hinteren Sensoren und z.B. einem im Speicher der Steuereinrichtung 6 abgelegten Halteabstand wird die Bremskraft berechnet die notwendig ist, um diesen exakten zweiten Abstand zu erreichen. Diese Berechnung findet im Steuergerät statt, welches die Signale für den Bremsvorgang steuert.

In Fig. 2 ist die Geschwindigkeit des Fahrzeugs über den Weg für den in Fig.1 beispielhaften Einparkvorgang dargestellt. Aus dem Stillstand wird das Fahrzeug kurzzeitig beschleunigt, nachdem der Fahrzeugführer den Rückwärtsgang im Automatikgetriebe eingelegt und die Bremse geöffnet hat. Die Fahrzeuggeschwindigkeit erhöht sich auf die Geschwindigkeit, die die Leerlaufdrehzahl ermöglicht. Im Sinne der Erfindung schleift die Kupplung bei Leerlaufdrehzahl, so dass mit einer niedrigen Geschwindigkeit von beispielsweise 3 km/h gefahren wird. Die Geschwindigkeit wird bis zum Erreichen des ersten Abstandes beibehalten. Bei Erreichen des ersten Abstandes wird die Kupplung geöffnet und die Fahrzeuggeschwindigkeit bis zum erreichen des zweiten Abstandes, der dem Halteabstand entspricht, bis zum Stillstand abgebremst.

Fig. 3 zeigt beispielhaft den Verlauf der Motorleistung über die Wegstrecke, wenn das Fahrzeug entgegen einer Neigung bewegt werden muss. Die Motorleistung wird kurzzeitig erhöht, um das Anfahren des Fahrzeugs zu verbessern. Die Drehzahl des Motors ist in diesem Fall kurzzeitig höher als die Leerlaufdrehzahl. Nach dem Anfahren wird die Motorleistung zurückgenommen und das Fahrzeug im Leerlauf betrieben. Die Erhöhung ist abhängig vom gemessenen Weg zum Hindernis und von der ermittelten Neigung sowie Fahrzeugeigenschaften, wie beispielsweise dem Gewicht, den Reifen, usw. In der Steuereinrichtung 6 wird berechnet, ab welchem Abstand zum Objekt 3 die Motorleistung zurückgenommen wird um das Fahrzeug dann erfinderisch mit Leerlaufdrehzahl zu bewegen. Anhand der genannten Informationen wird ebenfalls berechnet, ab wann der erste Abstand zu Ende ist, d.h. die Kupplung geöffnet wird. Erfinderisch kann dieser Abstand durch kontinuierliche Informationen an das Steuergerät des mindestens einen hinteren Sensors korrigiert werden. In Figur 3 wird ebenfalls deutlich, dass nach Erreichen des ersten Abstandes, d.h. nach Unterbrechung der Momentenübertragung durch Öffnen der Kupplung, die Leerlaufdrehzahl annähernd konstant bleibt.

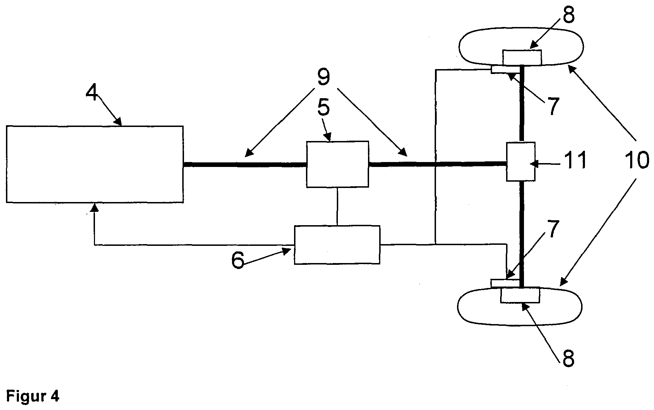

Figur 4 zeigt beispielhaft die erfinderische Vorrichtung mit einem Motor 4 und mit einem Motorsteuergerät, welches hier nicht dargestellt ist. Der Motor ist in diesem Beispiel ein Verbrennungsmotor. Die Leistung des Motors 4 wird über eine Antriebswelle 9 an ein Automatikgetriebe 5 übertragen und das Getriebe gibt die entsprechend angeforderte Leistung über das Differenzial 11 an die Räder 10 weiter. Eine vorteilhafte Steuereinrichtung 6 für den Einparkvorgang, ist mit dem Motorsteuergerät, dem Bremsaktuator mit Steuergerät 7 und dem Automatikgetriebe 5 verbunden und kann Signale empfangen und senden. Der erfindungsgemäße mindestens eine Sensor zur Ermittlung des Abstandes zu einem hinteren Objekt ist in Figur 4 ebenfalls nicht dargestellt. Der mindestens eine Sensor liefert ebenfalls Informationen an die Steuereinrichtung 6, die beispielsweise ein Rechner ist. Die Steuereinrichtung 6 bekommt vom Fahrzeugführer ein Signal, dass sich das Fahrzeug erfinderisch an ein Objekt annähern soll. Das Fahrzeug beginnt loszufahren, wenn der Rückwärtsgang eingelegt und die Bremse gelöst ist, wobei der Motor 4 mit Leerlaufdrehzahl betrieben wird. Die Steuereinrichtung sendet ein Signal an das Getriebe-Steuergerät 5, so dass mindestens eine Kupplung im Getriebe 5 nicht ganz geschlossen wird und das Fahrzeug mit Leerlaufdrehzahl sich mit einer Geschwindigkeit von ca. 3 km/h bewegt. Sofern der mindestens eine Sensor das Objekt erkennt sendet er ein entsprechendes Signal and die Steuereinrichtung 6 ermittelt den ersten Abstand bis zu dem mit Leerlaufdrehzahl an das Objekt gefahren wird. Bei Erreichen des ersten Abstandes werden entsprechende Signale an den Bremsaktuator 7 gesendet, um den Bremsvorgang an mindestens einer Bremseinrichtung 8 einzuleiten. Gleichzeitig werden Signale an das Automatikgetriebe 5 gesendet, um die Kupplung zu öffnen, so dass keine Kraftübertragung des Motors 4 an die Räder 10 mehr statt findet. Die Bremsung erfolgt derart, dass der in der Steuereinrichtung 6 abgelegte Halteabstand zum Objekt exakt erreicht wird. Durch die Informationen des mindestens einen Sensors an die Steuereinrichtung 6 ist eine Berechnung der Bremskraft zum Erreichen des exakten Halteabstandes zum Objekt vorteilhaft gegeben.

## Patentansprüche

1. Verfahren zur Steuerung eines Fahrzeugs (1) mit einer Antriebseinrichtung (4) und einer Bremseinrichtung (8) während eines Einparkvorganges bis an ein Objekt (3), wobei der Abstand zum Objekt erfasst wird, **dadurch gekennzeichnet, dass** bis zu einem ersten Abstand des Fahrzeugs zum Objekt (3) das Fahrzeug (1) aus dem Stillstand, ohne Eingriff in die Motorsteuerung, auf eine Einparkgeschwindigkeit gebracht wird, die maximal der mit Leerlaufdrehzahl erreichbaren Antriebsgeschwindigkeit entspricht, die Einparkgeschwindigkeit gehalten wird und nach Erreichen des Abstandes bis zu einem zweiten Abstand, der dem Halteabstand entspricht, mit der Bremseinrichtung (8) bis zum Stillstand abgebremst wird.

2. Verfahren nach Anspruch 1 **dadurch gekennzeichnet, dass** das Fahrzeug (1) mit Leerlaufdrehzahl der Antriebseinrichtung (4) bis zum ersten Abstand mit annähernd geschlossener Kupplung zur Kraftübertragung bewegt wird und nach Erreichen des ersten Abstandes bis zu dem zweiten Abstand die Kupplung geöffnet ist.

3. Verfahren nach Anspruch 2 **dadurch gekennzeichnet, dass** die Kupplung annährend geschlossen, bzw. geöffnet wird.

4. Verfahren nach Anspruch 1 **dadurch gekennzeichnet, dass** die Leerlaufdrehzahl des mindestens einen Motors im Bereich von 600 bis 1500 U/min, vorzugsweise bei ca. 800 U/min liegt.

5. Verfahren nach Anspruch 1 **dadurch gekennzeichnet, dass** als Antriebseinrichtung (4) ein Elektromotor verwendet wird.

6. Verfahren nach Anspruch 1 **dadurch gekennzeichnet, dass** bei Betätigung der Bremseinrichtung (8) die Kupplung geöffnet wird.

7. Vorrichtung zur Steuerung eines Fahrzeugs (1) während eines Einparkvorganges bis an ein Objekt (3) mit einer Antriebseinrichtung (4), einer Bremseinrichtung (8), mindestens einem Sensor zur Bestimmung eines Abstandes zu einem Objekt (3) und mindestens einer Steuereinrichtung (6) **dadurch gekennzeichnet, dass** die Vorrichtung derart ausgebildet ist, dass die Antriebseinrichtung (4) das Fahrzeug (1) aus dem Stillstand, ohne Eingriff in die Motorsteuerung, auf eine Geschwindigkeit bringt, die maximal der Antriebsgeschwindigkeit mit Leerlaufdrehzahl entspricht, die Antriebseinrichtung (4) die Geschwindigkeit bis zu einem ersten Abstand hält und die Bremseinrichtung das Fahrzeug (1) bis zu einem zweiten Abstand zum Objekt (3), der dem Halteabstand entspricht, bis zum Stillstand bremst.

8. Vorrichtung nach Anspruch 7 **dadurch gekennzeichnet, dass** die Vorrichtung derart ausgebildet ist, dass sie die Antriebsgeschwindigkeit mit Leerlaufdrehzahl mit annährend geschlossener Kupplung hält.

9. Vorrichtung nach Anspruch 7 **dadurch gekennzeichnet, dass** die Antriebseinrichtung (4) ein Elektromotor ist.

## Claims

1. Method for steering a vehicle (1) having a drive apparatus (4) and a brake apparatus (8) up to an object (3) during a parking process, wherein the distance from the object is sensed, **characterized in that**, up to a first distance of the vehicle from the object (3), the vehicle (1) is adjusted from the stationary state, without intervention in the engine controller, to a parking speed which corresponds at maximum to the drive speed which can be reached with the idling rotational speed, the parking speed is maintained, and after the distance is reached braking is carried out to the stationary state with the brake apparatus (8), up to a second distance which corresponds to the holding distance.

2. Method according to Claim 1, **characterized in that** the vehicle (1) is moved at the idling rotational speed of the drive apparatus (4) up to the first distance with an approximately closed clutch for transmitting force, and after the first distance is reached the clutch is opened up to the second distance.

3. Method according to Claim 2, **characterized in that** the clutch is approximately closed or opened.

4. Method according to Claim 1, **characterized in that** the idling rotational speed of the at least one engine is in the range from 600 to 1500 rpm, preferably approximately 800 rpm.

5. Method according to Claim 1, **characterized in that** an electric motor is used as the drive apparatus (4) .

6. Method according to Claim 1, **characterized in that** when the brake apparatus (8) is activated, the clutch is opened.

7. Device for steering a vehicle (1) during a parking process up to an object (3), having a drive apparatus (4), a brake apparatus (8), at least one sensor for determining a distance from an object (3) and at least one control apparatus (6), **characterized in that** the device is embodied in such a way that the drive apparatus (4) brings the vehicle (1) from the stationary state, without intervention in the engine controller, to a speed which corresponds at maximum to the drive speed with the idling rotational speed, the drive apparatus (4) maintains the speed up to a first distance, and the brake apparatus brakes the vehicle (1) to the stationary state up to a second distance from the object (3) which corresponds to the holding distance.

8. Device according to Claim 7, **characterized in that** the device is embodied in such a way that it maintains the drive speed with the idling rotational speed with an approximately closed clutch.

9. Device according to Claim 7, **characterized in that** the drive apparatus (4) is an electric motor.

## Revendications

1. Procédé pour commander un véhicule (1) avec un dispositif d'entraînement (4) et un dispositif de freinage (8) pendant un processus de mise en stationnement jusqu'à un objet (3), dans lequel on détecte la distance de l'objet, **caractérisé en ce que** l'on amène le véhicule (1) à partir de l'arrêt, sans intervention dans la commande du moteur, jusqu'à une première distance du véhicule à l'objet (3), à une vitesse de mise en stationnement, qui correspond au maximum à la vitesse de propulsion réalisable avec le nombre de tours du ralenti, on maintient la vitesse de mise en stationnement et après avoir atteint la distance on freine le véhicule jusqu'à l'arrêt, avec le dispositif de freinage (8), jusqu'à une deuxième distance, qui correspond à la distance de garde.

2. Procédé selon la revendication 1, **caractérisé en ce que** l'on déplace le véhicule (1) avec le nombre de tours du ralenti du dispositif d'entraînement (4) jusqu'à la première distance avec l'embrayage approximativement fermé pour la transmission de force et après avoir atteint la première distance l'embrayage est ouvert jusqu'à la deuxième distance.

3. Procédé selon la revendication 2, **caractérisé en ce que** l'on ferme ou on ouvre approximativement l'embrayage.

4. Procédé selon la revendication 1, **caractérisé en ce que** le nombre de tours du ralenti dudit au moins un moteur se situe dans la plage de 600 à 1500 tr/min, de préférence à environ 800 tr/min.

5. Procédé selon la revendication 1, **caractérisé en ce que** l'on utilise un moteur électrique comme moteur d'entraînement (4).

6. Procédé selon la revendication 1, **caractérisé en ce que** l'on ouvre l'embrayage lors de l'actionnement du dispositif de freinage (8).

7. Dispositif pour commander un véhicule (1) pendant un processus de mise en stationnement jusqu'à un objet (3) avec un dispositif d'entraînement (4), un dispositif de freinage (8), au moins un capteur pour la détermination d'une distance d'un objet (3) et au moins un dispositif de commande (6), **caractérisé en ce que** le dispositif est configuré de telle manière que le dispositif d'entraînement (4) amène le véhicule (1) à partir de l'arrêt, sans intervention dans la commande du moteur, à une vitesse qui correspond au maximum à la vitesse de propulsion avec le nombre de tours du ralenti, que le dispositif d'entraînement (4) maintienne la vitesse jusqu'à une première distance et que le dispositif de freinage freine le véhicule (1) jusqu'à l'arrêt jusqu'à une deuxième distance de l'objet (3), qui correspond à la distance de garde.

8. Dispositif selon la revendication 7, **caractérisé en ce que** le dispositif est configuré de telle manière qu'il maintienne la vitesse de propulsion avec le nombre de tours du ralenti avec l'embrayage approximativement fermé.

9. Dispositif selon la revendication 7, **caractérisé en ce que** le moteur d'entraînement (4) est un moteur électrique.
